# EUROPEAN PATENT SPECIFICATION

(11) **EP 3 033 256 B1**
(45) Date of publication and mention of the grant of the patent: **21.09.2022**
(21) Application number: 14772472.8
(22) Date of filing: 02.07.2014
(51) Int. Cl.: B60T 17/08

(54) **IMPROVED SEALING SYSTEM DEVELOPED FOR SPRING BRAKE CHAMBERS PROVIDING LENGTH ADVANTAGE**
VERBESSERTES DICHTUNGSSYSTEM FÜR FEDERDRUCKBREMSKAMMERN MIT LÄNGENVORTEIL
SYSTÈME D'ÉTANCHÉITÉ AMÉLIORÉ DÉVELOPPÉ POUR DES CHAMBRES DE FREIN À RESSORT FOURNISSANT UN AVANTAGE QUANT À LA LONGUEUR

(30) Priority: 15.08.2013 TR 201309790
(43) Date of publication of application: 22.06.2016
(73) Proprietor: Arfesan Arkan Fren Elemanlari Sanayi Ve Ticaret A.S., 41480 Kocaeli (TR)
(72) Inventor: ARKAN, Fuat Burtan, 41480 Kocaeli (TR); BATTAL, Yavuz, 41480 Kocaeli (TR); KULAC, Omer Faruk, 41480 Kocaeli (TR)
(74) Representative: Yalçiner Patent and Consulting Ltd.
(86) International application number: PCT/TR2014/000237
(87) International publication number: WO 2015/023238

(56) References cited:
- DE-A1-102008 061 354
- GB-A- 1 210 394
- GB-A- 1 300 162
- US-B1- 6 357 337

## Description

### Technical Field

The sealing system invention relates to the fitting between the lower body located in the spring section of diaphragm piston brake chambers used in air brake systems and the sealing area and sealing elements used in this fitting.

### The State-of-the-Art

In diaphragm-piston spring brake chambers, sealing between the lower body and the adaptor plate in the spring section is ensured by placing one or more than one sealing elements used in the compartment machined into the bottom of the Z adaptor plate in such a manner that it faces the annular interior surface (Figure-2 and Figure-5). In the prior art, the disadvantage of the lower body is that sensitivity in the section where sealing elements operate as the adaptor plate is mounted is high and various geometric tolerances are needed. A higher-cost production is required to meet these tolerance needs.

There is a probability that sealing elements may go off the slot while the adaptor plate is being mounted to the lower body. The invention mentioned in CA 02545406 A1 regarding sealing properties, relates to a sealing structure developed for use in diaphragm-diaphragm spring brake chambers. While the invention developed relates to sealing, it gains drive force by being fed an electric input. However, the said invention by no means mentions a length advantage. This document does not involve the length advantage and sealing features included in the present invention.

The invention mentioned in EP 2 177411 B1 relates to a sealing structure developed for use in diaphragm-diaphragm spring brake chambers. While the invention developed relates to sealing, it also deals with efficient utilisation of sealing elements' lengths. However, sealing mentioned in said document refers to sealing between the hole in the middle of the diaphragm and the pushrod tube. The fitting area of the present invention developed with the design according to the invention and the fitting area included in the said invention are not the same and also are different with regard to the technical contents.

DE 10 2008 061354 A1 discloses a sealing system developed for spring brake chambers addressing a different technical problem.

### Aim and Brief Description of the Invention

The invention consists of a spring chamber in spring brake chambers used in heavy commercial vehicles such as lorries, tow trucks, articulated lorries and buses, which is actuated in case of an air leak or air discharge (activating parking brake) from the service brake chamber that is active under normal driving conditions. While the service section operates to slow down and stop a vehicle, the spring section operates to immobilise a vehicle. In other words, the service chamber functions when force is applied on the foot brake and the spring chamber functions when force is applied on the hand brake. The spring is compressed between the piston and the lower body with the air sent into the spring chamber. This spring is released as the air in the spring chamber is discharged and provides the force required for braking.

Spring brake chambers are classified into two main types: diaphragm-diaphragm spring brake chambers and diaphragm-piston spring brake chambers. The body fittings according to the invention relate to diaphragm-piston type spring brake chambers.

It is possible that diaphragm-piston spring brake chambers are subject to certain size limitations depending on the field of use. Such limitations are associated with the design of the vehicle in which the chamber is to be used and there are ongoing studies in the automotive sector regarding making all components more compact. With the present invention, chamber length reduction is achieved by using a design area in a different manner which directly affects chamber length in diaphragm-piston spring chamber design.

Another aim is to relieve production tolerances for adaptor plate in the adaptor plate - lower body relationship as previously mentioned in the prior art problems and to minimise any probable production-related deficiencies.

### Definitions of the Figures I Ilustrating the Invention

The figures are for a better explanation of the sealing system developed with this invention and their corresponding explanations are as follows.
Figure-1: Cross sectional-Detail View of the Sealing System Design According to the Invention
Figure-2: Cross sectional-Detail View of the Standard Sealing System
Figure-3: Cross sectional-Detail View of Sealing Area Alternatives According to the Invention
Figure-4: Cross sectional-Detail View of Fitting Area According to the Invention
Figure-5: Cross sectional-Detail View of Standard Fitting Area

### Definitions of Elements Constituting the Invention

Parts and sections included in the figures for a better explanation of method and the implementation of the method in the sealing system developed with this invention are enumerated and a corresponding definition for each number is provided below.
1 ) Diaphragm-Piston Spring Brake Chamber
2 ) Service Section
3 ) Spring Section
4 ) Adaptor Plate - Lower Body Fitting Area
5 ) Sealing Element
6 ) Upper Body
7 ) Adaptor plate
8 ) Lower Body
9 ) Sealing Element Slot
10 ) Cylindrical Surface on the Lower Body
11 ) Piston
12 ) Spring
13 ) Planar Horizontal Surface on the Lower Body
14 ) Sealing Area

### Detailed Description of the Invention

The fact that the sealing elements (5) used in the invention require precise tolerance, makes it hard to match these tolerances with standard design and higher cost production is needed, as well as inconveniences such as the possibility that sealing elements (5) go out of their slot (9) while the adaptor plate (7) is being mounted to the lower body (8). These are the reasons behind the development of the invention.

The invention resolves these problems by, as distinct from the existing systems, moving the sealing area (14) between the adaptor plate (7) and the lower section (8) from the cylindrical surface (10) to the horizontal surface (13) in the outwardly formed fitting area (Figure-1 and Figure-4). Except for this fitting area (4), another feature different from the existing systems is that the chamber length is shorter.

In said invention, sealing between the adaptor plate (7) and the lower body (8) in the diaphragm-piston spring brake chamber (1) is provided by using one or more sealing elements (5) between the formed planar horizontal surface (13) on the lower body (8) and the sealing area (14) under the adaptor plate (7) machined for the sealing element (5). The channel (9) under the adaptor plate (7) which is used for the sealing element (5) is created by machining. The formed planar horizontal surface (13) of the lower body (8), on the other hand, is created by moulding. It does not require any further processing.

The sealing area (14) between the adaptor plate (7) and the lower body (8) which directly influences chamber length in diaphragm-piston spring chamber (1) design is specially designed and the chamber length is reduced by moving it to the surface (13) on the lower body (8) which is formed to be planar horizontal. Besides, since the centre of gravity is moved closer to the fitting area in the brake system to which the chamber is to be mounted, vibration and momentum transferred to mounting bolts are reduced.

With the development of the said invention, production tolerances for the adaptor plate (7) in the adaptor plate (7) - lower body (8) relationship as previously mentioned in the prior art are relieved and any probable production-related deficiencies are minimised.

In said design, the fitting area (4) between the lower body (8) and the adaptor plate (7) is specially designed in order to move the sealing area (14) from the currently used standard position to the position according to our invention. The sealing element (5) and the sealing element slot (9) are moved from the cylindrical surface (10) on the lower body to the planar horizontal surface (13) on the lower body created in this specially designed fitting area. The sealing element (5) and the sealing element slot (9) whose position in the chamber (1) are changed may have more than one or different geometric shapes (Figure-3).

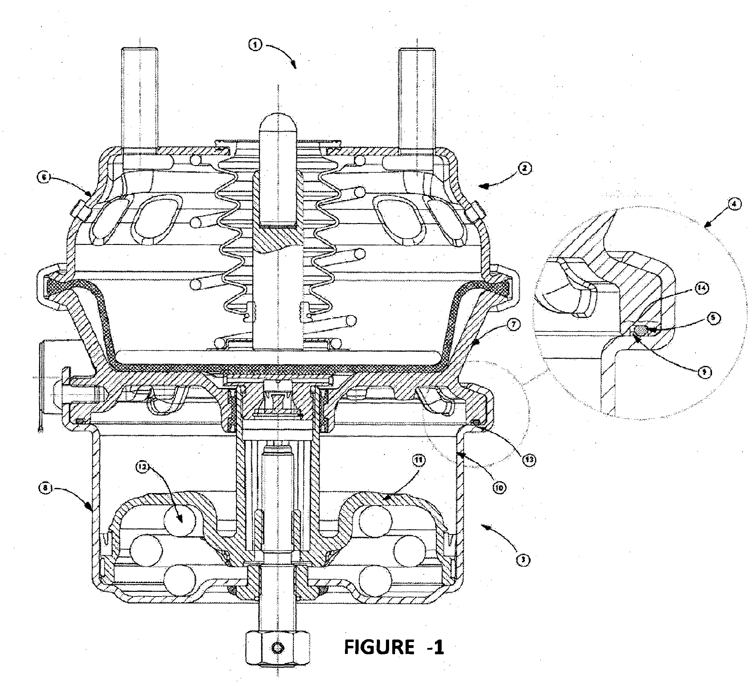

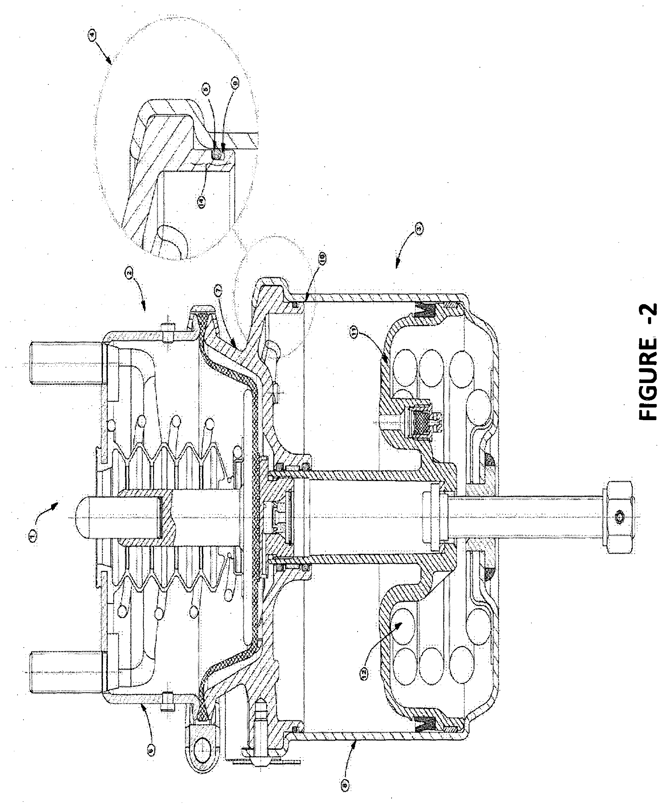

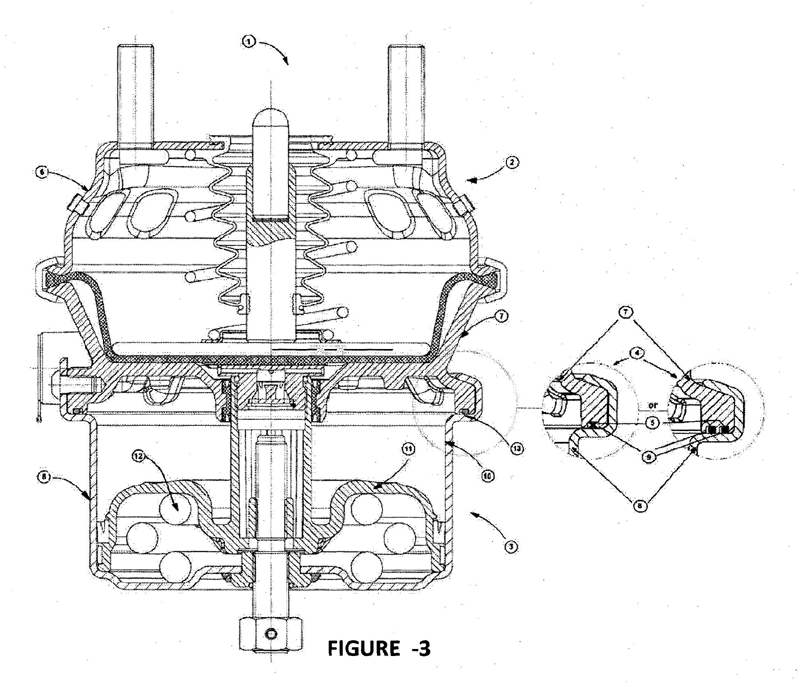

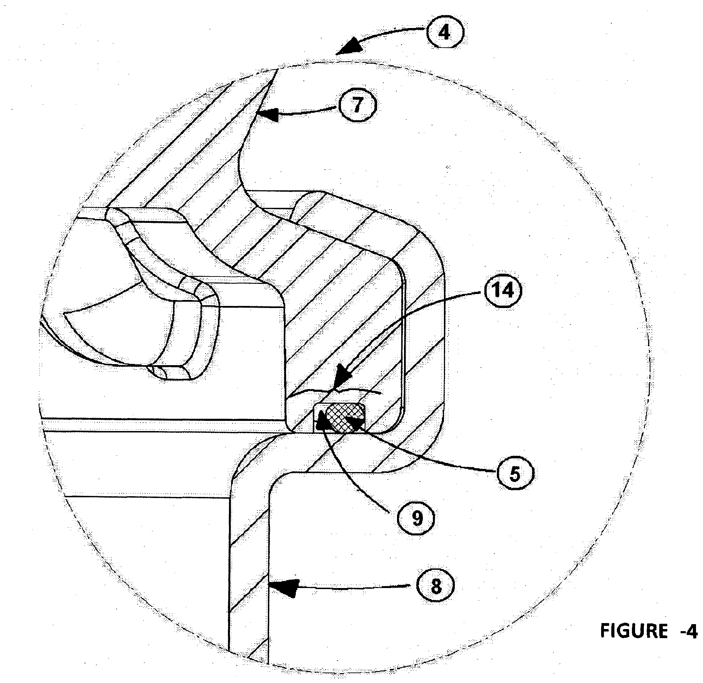

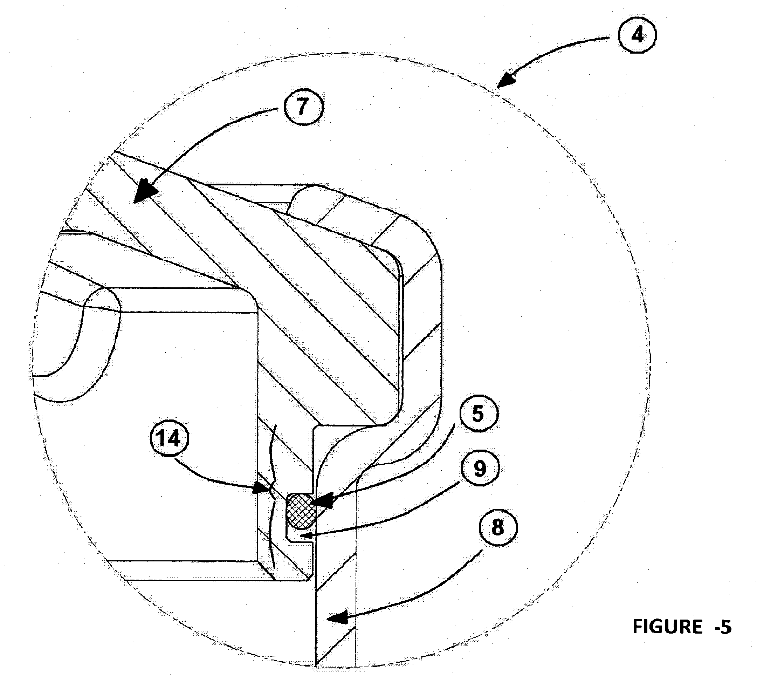

## Claims

1. A sealing system comprising the elements;
• Diaphragm-Piston Spring Brake Chamber (1)
• Service Section (2)
• Spring Section (3)
• Upper Body (6)
• Adaptor plate (7)
• Lower Body (8)
• Piston (11)
• Spring (12) Cylindrical Surface on the Lower Body (10)
• Planar Horizontal Surface on the Lower Body (13),
and **characterised by** comprising
• outwardly formed Adapter Plate - Lower Body Fitting Area (4)
• Sealing Area (14) located in the outwardly formed fitting area (4) between the adaptor plate (7) and the lower section (8) to reduce diaphragm-piston spring chamber length and reduce adaptor plate production tolerances
• Sealing Element (5) located in the fitting area (4) having an annular or polygonal cross section
• Sealing Element Slot (9) located in the fitting area (4).

2. Sealing system according to Claim 1, **characterised in that** the sealing element (5) in the fitting area (4) is used for one or more times.

3. Sealing system according to Claim 1, **characterised by** being constituted using one or more than one fitting element (5) as the lower body (8) is formed accordingly.

## Patentansprüche

1. Dichtungssystem umfassend die Elemente;
• Membran-Kolben-Federbremskammer (1)
• Betriebsabschnitt (2)
• Federabschnitt (3)
• Oberer Körper (6)
• Adapterplatte (7)
• Unterer Körper (8)
• Kolben (11)
• Feder (12) Zylindrische Fläche auf dem unteren Körper (10)
• Horizontale ebene Fläche am unteren Körper (13),
und **gekennzeichnet durch** umfassend
• einen nach außen geformte Adapterplatte - unterer Körper-Anpassungsbereich (4)
• Dichtungsbereich (14), der in dem nach außen geformten Anpassungsbereich (4) zwischen der Adapterplatte (7) und dem unteren Abschnitt (8) angeordnet ist, um die Länge der Federkammer der Kolbenmembran zu verringern und die Fertigungstoleranzen der Adapterplatte zu verringern.
• Dichtungselement (5), das im Anpassungsbereich (4) angeordnet ist mit einem ringförmigen oder polygonalen Querschnitt.
• Schlitz (9) des Dichtungselements, der im Anpassungsbereich (4) angeordnet ist.

2. Dichtungssystem nach Anspruch 1, **dadurch gekennzeichnet, dass** das Dichtungselement (5) im Anpassungsbereich (4) ein- oder mehrfach verwendet wird.

3. Dichtungssystem nach Anspruch 1, **gekennzeichnet durch** die Bildung unter Verwendung eines oder mehrerer eines Anpassungselements (5), wie der untere Körper (8) entsprechend geformt ist.

## Revendications

1. Système d'étanchéité comprenant les éléments ;
• Chambre de frein à ressort du diaphragme-piston (1)
• Section de service (2)
• Section de ressort (3)
• Corps supérieur (6)
• Plaque adaptatrice (7)
• Corps inférieur (8)
• Piston (11)
• Ressort (12) Surface cylindrique sur le corps inférieur (10)
• Surface plane horizontale sur le corps inférieur (13),
et **caractérisé par** comprenant
• Zone de raccord (4) de plaque adaptatrice - corps inférieur formée vers l'extérieur
• Zone d'étanchéité (14) située dans la zone de raccord formée vers l'extérieur (4) entre la plaque adaptatrice (7) et la section inférieure (8) pour réduire la longueur de la chambre à ressort du diaphragme-piston et réduire les tolérances de production de la plaque adaptatrice.
• Elément d'étanchéité (5) situé dans la zone de raccord (4) ayant une section transversale annulaire ou polygonale.
• Fente de l'élément d'étanchéité (9) située dans la zone de raccord (4).

2. Système d'étanchéité selon la revendication 1, **caractérisé en ce que** l'élément d'étanchéité (5) dans la zone de raccord (4) est utilisé pour une ou plusieurs fois.

3. Système d'étanchéité selon la revendication 1, **caractérisé en ce qu'**il est constitué en utilisant un ou plus d'un élément de raccord (5) comme le corps inférieur (8) est formé en conséquence.
